# FASCICULE DE BREVET EUROPEEN

(11) **EP 1 342 927 B1**
(45) Date de publication et mention de la délivrance du brevet: **24.05.2006**
(21) Numéro de dépôt: 03352004.0
(22) Date de dépôt: 04.03.2003
(51) Int. Cl.: F16B 35/00, B64D 29/06

(54) **Dispositif de fixation d'un élément sur une structure d'aéronef**
Vorrichtung zum Befestigen eines Bauteils an einer Luftfahrzeugstruktur
Device for attaching a component to an aircraft structure

(30) Priorité: 08.03.2002 FR 0202951; 28.05.2002 FR 0206472
(43) Date de publication de la demande: 10.09.2003
(73) Titulaire: AIRBUS France, 31060 Toulouse (FR)
(72) Inventeur: Rouyre, Francois, 31700 Cornebarrieu (FR); Le Lay, Loic, 32600 L'Isle Jourdain (FR)
(74) Mandataire: Hartmann, Jean-Luc

(56) Documents cités:
- WO-A-99/47822
- US-A- 3 563 131
- US-A- 4 627 590
- US-A- 5 542 777

## Description

La présente invention concerne un dispositif de fixation d'un élément sur une structure d'aéronef. A titre d'exemple, on peut citer un carénage, et plus particulièrement un carénage ventral d'aéronef appelé couramment "belly fairing", ou bien encore des conduites de tous types (électricité, air, eau, liquide hydraulique, ...).

Dans un avion, le nombre des points d'ancrage prévus pour permettre la fixation d'un élément sur la structure de l'avion est limité. En effet, il convient de ne pas risquer de fragiliser la structure. Des procédés particuliers doivent donc être mis en oeuvre pour réaliser dans la structure des alésages et taraudages. Les frais entraînés par la mise en oeuvre de tels procédés sont relativement élevés et on limite donc volontairement le nombre de points de fixation. Ainsi, un même point de fixation est parfois utilisé pour la fixation de plusieurs éléments.

En outre, lorsqu'un point de fixation est utilisé pour plusieurs éléments, la position de ce point de fixation n'est pas forcément la position idéale pour tous ces éléments. Ainsi par exemple, pour la fixation d'un carénage ventral d'aéronef, lorsqu'un porte à faux relativement important existe entre un bord libre du carénage et son point de fixation, il est possible de se servir du point de fixation disponible et de fixer le carénage par triangulation à partir de ce point. Une première bielle, sensiblement perpendiculaire au carénage, relie alors le point de fixation à ce carénage. La seconde bielle, quant à elle, relie le carénage, à proximité de son bord libre, au point de fixation le plus proche. Cette seconde bielle permet de limiter le porte à faux mais est sensiblement inclinée par rapport à la normale au carénage. Elle ne peut donc résister à des efforts d'arrachement importants.

Le document US-5,542,777 concerne un dispositif de fixation sur un panneau composite présentant deux faces non parallèles et un renfort central. Le dispositif de fixation comporte une douille comportant un rebord reposant sur une première face, un alésage traversant et une cavité sphérique. Il comporte également un écrou avec une tête sphérique et une tige filetée, taraudée et solidaire de la tête sphérique. Une entretoise taraudée est vissée sur le filetage de la tige de manière à ajuster la longueur du dispositif de fixation à l'épaisseur du panneau. Soit la tige, soit l'entretoise comporte des moyens de fixation additionnels.

La présente invention a alors pour but de fournir un dispositif de fixation nouveau n'utilisant pas les points d'ancrage habituels sur une structure d'aéronef. Bien entendu, un tel dispositif devra permettre une excellente fixation des éléments sur la structure étant donné l'application aéronautique de ce dispositif.

A cet effet, elle propose un dispositif de fixation d'un élément sur une structure d'aéronef qui met en oeuvre des organes de fixation comportant d'une part une tige munie à l'une de ses extrémités d'une tête et présentant à son autre extrémité sur sa paroi périphérique un usinage extérieur et d'autre part une douille coopérant avec l'usinage de la tige pour venir se fixer sur cette tige, la tige d'au moins l'un des organes de fixation présentant du côté de son usinage extérieur un taraudage longitudinal.

Selon l'invention, ce dispositif de fixation comporte des moyens pour l'accrochage de l'élément présentant une tige filetée coopérant avec ledit taraudage longitudinal.

Ainsi, l'élément vient se fixer sur un organe de fixation de la structure. Le taraudage utilisé pour la fixation de l'élément sert généralement uniquement pour la mise en place de l'organe de fixation. De telles dispositifs sont parfois appelées "pull-in" et servent à l'assemblage de pièces constitutives de la structure de l'aéronef. L'invention propose d'utiliser un taraudage d'un pull-in, après sa mise en place, pour la fixation d'un élément. La tige du dispositif de fixation est habituellement montée de telle sorte que le taraudage se trouve vers l'intérieur de l'avion, donc opposé à l'élément à fixer. Il suffit ici de monter la tige dans le sens contraire pour que le taraudage puisse servir à la fixation de l'élément.

La tige usinée peut être simplement filetée et la douille correspondante est alors un écrou. Cette tige peut aussi reprendre la forme d'une vis mais présenter à la place du filetage de la vis, des empreintes. La douille est alors une bague de sertissage que l'on vient sertir sur l'extrémité de la tige.

Les moyens d'accrochage présentent par exemple un alésage s'étendant sensiblement perpendiculairement à la tige usinée. Ceci permet alors une liaison entre le dispositif de fixation et le carénage à l'aide d'une goupille comme cela se réalise habituellement lors d'une fixation à l'aide d'une bielle.

Pour garantir l'immobilisation du dispositif de fixation par rapport à la tige usinée et au taraudage sur lesquels il est fixé, ce dispositif comporte avantageusement un contre-écrou coopérant avec la tige filetée des moyens d'accrochage.

Dans une forme de réalisation préférée, le dispositif de fixation selon l'invention est tel que les moyens d'accrochage se présentent sous la forme d'un oeilleton muni d'une tige filetée. Le dispositif de fixation ne comporte alors qu'une seule pièce, associée éventuellement à un contre-écrou.

Dans une autre forme de réalisation, le dispositif de fixation selon l'invention est tel que les moyens d'accrochage comportent d'une part un axe fileté coopérant avec le taraudage de la tige usinée et d'autre part une chape fixée sur l'axe. Cette solution met en oeuvre deux pièces (et éventuellement des contre-écrous). Elle permet de garantir un bon montage et une bonne orientation des moyens d'accrochage par rapport à l'élément à fixer. L'axe fileté peut être vissé à fond dans le taraudage et la chape peut ensuite être positionnée par rapport à l'axe.

Dans cette dernière forme de réalisation, la chape est par exemple vissée sur l'axe fileté et est disposée entre deux écrous placés sur cet axe.

Dans une variante de réalisation convenant notamment pour la fixation de conduites de tous genres (électriques, pneumatiques, hydrauliques, ...), les moyens d'accrochage comportent par exemple un collier fixé sur la tige usinée à l'aide d'une vis.

La présente invention concerne également un aéronef dont la structure présente des organes de fixation comportant d'une part une tige munie à l'une de ses extrémités d'une tête et présentant à son autre extrémité sur sa paroi périphérique un usinage extérieur et d'autre part une douille coopérant avec l'usinage de la tige pour venir se fixer sur cette tige, la tige d'au moins l'un des organes de fixation présentant du côté de son usinage extérieur un taraudage longitudinal, caractérisé en ce que la tête d'au moins un organe de fixation est orientée vers l'intérieur de l'aéronef tandis que la tige et son taraudage correspondants sont orientés vers l'extérieur de l'aéronef.

Des détails et avantages de la présente invention ressortiront mieux de la description qui suit, faite en référence au dessin schématique annexé sur lequel :
La figure 1 montre en perspective et vu de dessous un avion et son carénage ventral (belly fairing),
La figure 2 montre en perspective un exemple de carénage ventral,
La figure 3 est une vue en coupe partielle, à échelle agrandie, selon la ligne de coupe III-III de la figure 1 montrant la fixation du carénage ventral à proximité d'un bord libre au niveau de l'aile de l'avion,
La figure 4 est une vue du détail IV de la figure 3 à échelle agrandie,
La figure 5 est une vue correspondant à la figure 4 pour une variante de réalisation,
La figure 6 montre en perspective éclatée le dispositif de fixation de la figure 5,
La figure 7 montre partiellement en coupe un organe de fixation apte à recevoir un dispositif de fixation selon l'invention, et
La figure 8 représente une variante de réalisation d'un dispositif de fixation selon l'invention monté sur l'organe de fixation de la figure 7.

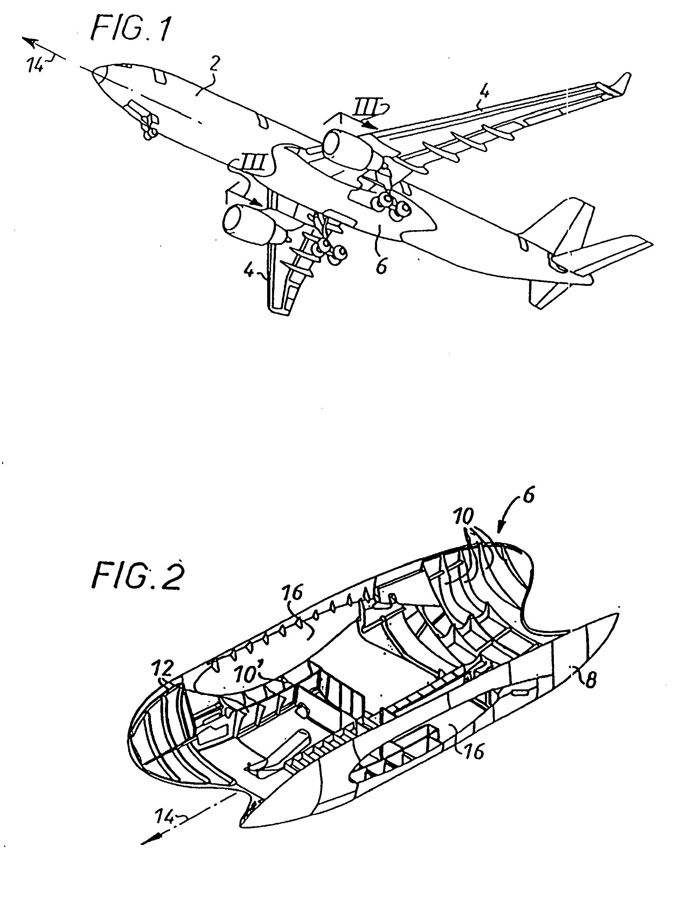

La figure 1 représente en perspective et en vue de dessous un avion destiné au transport de passagers. Cet avion comporte une carlingue 2 de laquelle partent deux ailes 4. La partie inférieure de la carlingue 2 porte entre les ailes 4 un carénage ventral 6 appelé couramment belly fairing. La figure 2 montre en perspective un exemple d'un tel carénage ventral 6. On remarque sur cette figure que ce carénage ventral 6 comporte une surface extérieure 8 rigidifiée par des nervures appelées cadre 10 ou voile 12 selon leur orientation par rapport à l'axe de l'avion 14. La surface extérieure 8 présente des ouvertures 16 au niveau de la base des ailes 4.

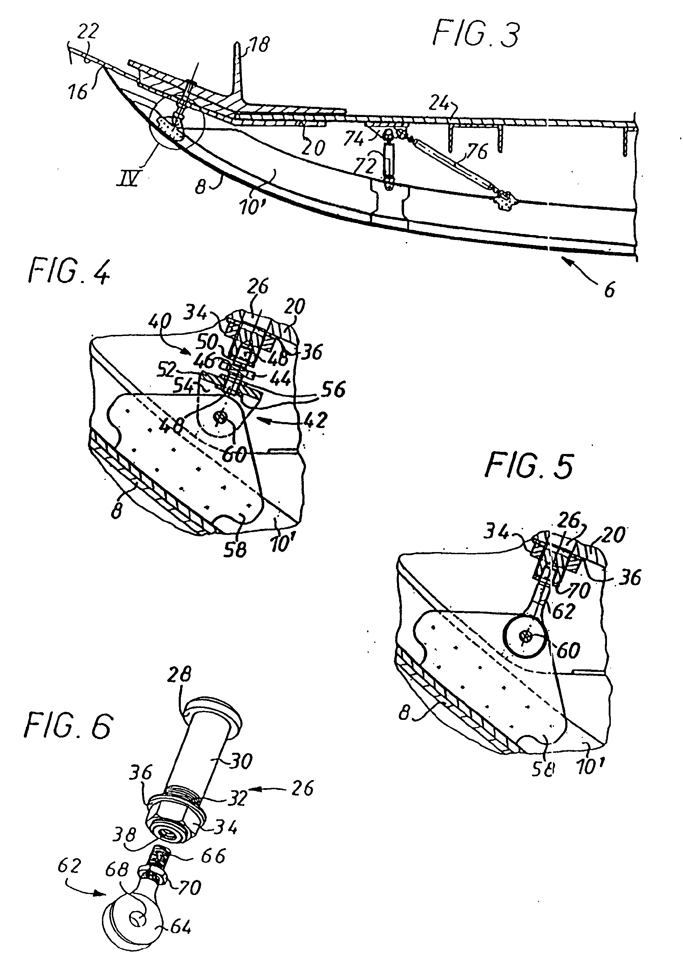

Une première application de la présente invention concerne la fixation du carénage ventral 6 à la structure de la carlingue 2 (figures 3 à 6). Elle concerne notamment la fixation de ce carénage ventral 6 au niveau des ouvertures 16 prévues pour le passage des ailes 4.

La figure 3 est une vue en coupe transversale par rapport à l'axe de l'avion 14. Sur cette figure, on aperçoit un cadre portant la référence 10' (figures 2 et 3). Outre ce cadre 10' et la surface extérieure 8 du carénage ventral 6, la figure 3 montre aussi une clisse 18, une contre-clisse 20 correspondante, une partie 22 de la base d'une aile 4 et un panneau intrados 24.

Le panneau intrados 24 est pris en sandwich entre la clisse 18 et sa contre-clisse 20. Il en va de même pour la partie 22 de la base de l'aile 4. Cet assemblage est réalisé à l'aide de vis 26 spéciales appelées usuellement "pull-in". De telles vis sont, contrairement aux vis classiques, destinées à travailler au cisaillement. La figure 6 montre une telle vis. Elle comporte de façon classique une tête 28, une tige 30 présentant à son extrémité opposée à la tête 28 un filetage 32. Ce filetage est destiné à recevoir un écrou 34 avec généralement la présence d'une rondelle 36. Pour résister à des efforts de cisaillement importants, un usinage sans réalisation de copeaux est mis en oeuvre et le matériau choisi pour réaliser cette vis est un alliage connu pour sa résistance élevée.

Comme on le voit sur la figure 6, la vis 26 présente également un taraudage 38. Ce taraudage 38 est centré sur l'axe de la vis 26 et est réalisé dans la tige 30 de celle-ci. Ce taraudage 38 est d'un diamètre sensiblement inférieur à celui du filetage 32. Il débouche dans la face de la vis opposée à la tête 28 et s'étend sur une longueur généralement comprise entre 10 et 20 mm.

Habituellement, la vis 26 est montée de telle sorte qu'après montage sa tête 28 repose sur la contre-clisse 20 tandis que la rondelle 36 et l'écrou 34 se trouvent du côté de la clisse 18. Le montage est réalisé en venant visser une tige filetée (non représentée) dans le taraudage 38. Cette tige filetée est alors tirée à l'aide d'un outil hydraulique vers l'intérieur de l'avion entraînant avec elle la vis 26. La tige 30 de la vis 26 vient alors se loger dans des alésages prévus à cet effet dans la clisse 18, la contre-clisse 20 et l'élément structurel à fixer. Les diamètres des alésages réalisés et de la tige 30 sont tels que la mise en place de la vis 26 doit se faire en force. Une fois la vis 26 en place, la tige filetée de l'outil hydraulique est retirée du taraudage 38 et la rondelle 36 ainsi que l'écrou 34 sont mis en place. Un serrage de l'écrou 34 à un couple prédéterminé est alors réalisé.

La présente invention propose de monter la vis 26 "à l'envers", c'est-à-dire en disposant la tête 28 du côté de la clisse 18 et l'écrou 34 du côté de la contre-clisse 20. De cette manière, le taraudage 38 se trouve du côté du carénage ventral 6 et ce taraudage 38 sert alors de point de fixation pour ce carénage 6.

Le montage de la vis 26 est réalisé ici selon la même procédure que décrite plus haut, en positionnant simplement différemment la vis 26.

La figure 4 montre un exemple de fixation du carénage extérieur 6 en se servant du taraudage 38. Le dispositif de fixation mis en oeuvre ici comporte un axe 40 et une chape 42.

L'axe 40 comporte une partie centrale 44 munie de méplats 46 ainsi que deux parties filetées 48 coaxiales s'étendant de part et d'autre de la partie centrale 44. Une partie filetée 48 est vissée à fond dans le taraudage 38. Un contre-écrou 50 est prévu pour maintenir cette partie filetée à fond dans le taraudage 38.

La chape 42 se présente sous la forme d'un étrier comportant une base 52 et deux branches 54. Ces dernières s'étendent sensiblement perpendiculairement à la base 52. La base 52 est munie d'un taraudage de manière à pouvoir venir se visser sur la seconde partie filetée 48 de l'axe 40. La base 52 se retrouve alors dans une position sensiblement parallèle à la contre-clisse 20. Des écrous 56 maintiennent le positionnement de la chape 42 par rapport à l'axe 40.

Le cadre 10' est équipé d'une pièce de fixation 58. Une goupille 60 relie la pièce de fixation 58 aux branches 54 de la chape 42. Des alésages dans la pièce de fixation 58 et dans les branches 54 permettent le passage de la goupille 60.

La figure 5 montre une variante de réalisation de la fixation du carénage ventral 6 à l'aide de la vis 26 et de son taraudage 38. Ici l'axe 40 et la chape 42 sont remplacés par un oeilleton 62. Ce dernier est représenté à plus grande échelle sur la figure 6. Il comporte une tête 64 à laquelle se raccorde une partie filetée 66. La tête 64 reprend la forme d'une tête de bielle. Elle est sensiblement cylindrique circulaire et présente une faible hauteur par rapport à son diamètre. Elle est percée longitudinalement en son centre et présente ainsi un alésage 68 destiné à recevoir la goupille 60 (figure 5). La partie filetée 66 s'étend perpendiculairement à l'axe de la tête 64 et de l'alésage 68 correspondant. Bien entendu, le filetage de cette partie filetée 66 correspond au taraudage 38 de la vis 26.

Le montage de l'oeilleton est réalisé par exemple en vissant à fond la partie filetée 66 dans le taraudage 38. Idéalement, dans cette position, la tête 64 de l'oeilleton se trouve orientée correctement pour permettre le passage de la goupille 60 dans l'alésage 68 et l'alésage correspondant prévu dans la pièce de fixation 58. Toutefois, si l'orientation n'est pas correcte, l'oeilleton est dévissé jusqu'à cette position correcte. Pour maintenir cette position, on peut prévoir un contre-écrou 70 mis en place sur la partie filetée 66 avant son introduction dans le taraudage 38. Une fois l'oeilleton en bonne position par rapport à la vis 26, le contre-écrou 70 est alors serré contre la vis 26, assurant ainsi l'immobilisation de l'oeilleton 62.

Un dispositif de fixation tel que décrit ci-dessus (figure 4 ou 5) est utilisé ici en complément d'un dispositif de fixation "classique". La figure 3 montre deux dispositifs de ce type. On remarque en effet sur cette figure une première bielle 72 reliant le panneau intrados 24 au cadre 10'. On retrouve sur ce panneau intrados 24 une pièce de fixation 74 du même type que la pièce de fixation 58 (figures 4 et 5). La première bielle 72 présente à chacune de ses extrémités un oeilleton et une goupille permet alors la fixation de cette bielle 72 sur la pièce de fixation 74. La bielle 72 est fixée de la même manière sur la pièce de fixation 58 du cadre 10'.

Une seconde bielle 76 est représentée sur la figure 3. Cette seconde bielle 76 relie la pièce de fixation 74 au cadre 10'. Le point de fixation sur le cadre 10' se trouve ici décalé vers le centre de l'avion. On réalise à l'aide des bielles 72 et 76 un maintien du carénage ventral 6 par triangulation.

Il aurait également été possible, en partant toujours de la même pièce de fixation 74, de réaliser une triangulation pour le maintien du carénage ventral 6 à proximité de l'ouverture 16. La solution alternative proposée par l'invention permet tout d'abord de garantir une meilleure fixation du carénage ventral 6 à la structure de l'avion. En effet, un dispositif de fixation selon l'invention (figure 4 ou 5) tel que décrit ci-dessus permet de mieux résister à un effort d'arrachement du carénage ventral 6 car ce dispositif de fixation est disposé sensiblement perpendiculairement au carénage et travaille alors essentiellement en traction. Une bielle telle la seconde bielle 76 est fortement inclinée par rapport à la normale à la surface extérieure 8 du carénage 6 et résiste donc moins efficacement à un effort d'arrachement de ce carénage 6.

L'utilisation du taraudage 38 de la vis 26 comme point de fixation permet aussi, de par un choix approprié de la vis 26, de réduire le porte à faux du carénage ventral 6. On voit sur la figure 3 qu'une bielle telle la seconde bielle 76 ne pourrait pas venir en prise aussi près du passage 16 de l'aile 4 que ne le fait le dispositif de fixation selon l'invention représenté sur cette figure 3.

Enfin, un dispositif de fixation selon la présente invention présente l'avantage d'être d'un prix de revient inférieur aux solutions de l'art antérieur tout en assurant, comme on l'a vu plus haut, une excellente fixation. En effet, aucun aménagement particulier n'est à prévoir du côté de la structure de l'avion et le montage d'un dispositif de fixation selon l'invention (par exemple un axe et une chape, ou un oeilleton), ne demande pas plus de temps (voire moins) que le montage d'une bielle.

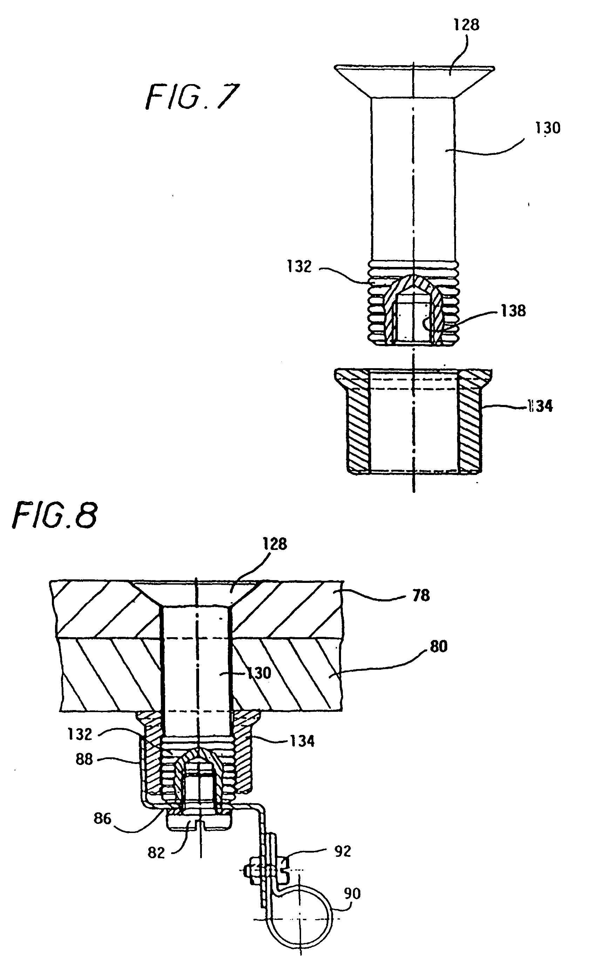

Un dispositif de fixation selon l'invention peut aussi être utilisé avec un organe de fixation différent de la vis 26 et son écrou 34. La figure 7 représente un organe de fixation différent pouvant également recevoir les dispositifs de fixation selon l'invention décrits plus haut.

L'organe de fixation de la figure 7 est formé d'une tige 130 et d'une douille 134. La tige 130 est une tige cylindrique circulaire. Elle présente à l'une de ses extrémités une tête 128 qui est ici une tête fraisée plate. L'autre extrémité de la tige 130 porte des empreintes 132 périphériques formant une série de rainures circulaires parallèles. De même que la tige 30 de la vis 26, la tige 130 présente également un taraudage 138. Ce dernier est centré sur l'axe de la tige 130 et est d'un diamètre sensiblement inférieur au diamètre extérieur de la tige 130. Le taraudage 138 débouche dans la face de la tige 130 opposée à la tête 128 et s'étend sur une longueur généralement comprise entre 10 et 20 mm.

La douille 134 est une pièce sertissable sur les empreintes 132 de la tige 130. Elle présente une surface intérieure sensiblement lisse qui par sertissage est déformée pour venir épouser les formes des empreintes 132.

La tige 130 peut être mise en place dans des alésages sans utilisation d'outil spécial (contrairement à la vis 26 décrite plus haut). Une fois en place, l'extrémité filetée d'un outil est vissée dans le taraudage 138 et vient tirer sur la tige 130 de manière à réaliser une forte pression au niveau de la tête 128. La douille 134 est poussée dans la direction opposée puis sertie. On obtient alors un excellent assemblage indémontable. Une fois l'assemblage réalisé, l'outil est retiré du taraudage 138 qui reste libre.

La figure 8 monte un exemple de réalisation d'un dispositif de fixation selon l'invention combiné à l'organe de fixation de la figure 7. Cette variante de réalisation pourrait également être utilisée en combinaison avec une vis 26. Sur la figure 8, l'organe de fixation relie un panneau 78 à un élément de structure 80. Ces deux éléments sont serrés entre la douille 134 et la tête 128. Après assemblage de ces deux éléments, le taraudage 138 reste libre. Il reçoit alors une vis 82 utilisée pour maintenir une patte de fixation 84. Cette patte de fixation présente une face d'appui 86 reposant contre la face de la tige 130 dans laquelle débouche le taraudage 138. Un rebord 88 est prévu d'un côté de cette surface pour venir en appui contre la paroi extérieure de la douille 134 et assurer ainsi un bon positionnement de la patte de fixation. A l'opposé du rebord 88, la patte de fixation est repliée et porte un collier 90, fixé à l'aide d'un boulon 92. Le collier peut alors recevoir tout type de conduite (électrique, pneumatique, hydraulique, ...). La taille et le type de collier sont bien entendu adaptés au type de conduite à fixer.

La présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

## Revendications

1. Dispositif de fixation d'un élément (6, 90) sur une structure d'aéronef, ce dispositif comportant :
- une tige (30 ; 130) munie à l'une de ses extrémités d'une tête (28 ; 128) et présentant à son autre extrémité d'une part, sur sa paroi périphérique, un usinage extérieur (32 ; 132) et d'autre part un taraudage longitudinal (38 ; 138), et
- des moyens pour l'accrochage de l'élément (6, 90) sur la tige (30 ; 130), ces moyens présentant à une première extrémité une tige filetée (48 ; 66 ; 82) coopérant avec ledit taraudage longitudinal (38 ; 138), **caractérisé en ce que** le dispositif comporte une douille (34 ; 134) coopérant avec l'usinage extérieur de la tige pour venir se fixer sur cette tige (30 ; 130) de manière à pouvoir serrer une partie de la structure de l'aéronef entre la tête (28 ; 128) et la douille (34 ; 134), et **en ce que** les moyens pour l'accrochage présentent des moyens d'attache (42 ; 64 ; 84) à une seconde extrémité.

2. Dispositif de fixation selon la revendication 1, **caractérisé en ce que** les moyens d'accrochage présentent un alésage (68) s'étendant sensiblement perpendiculairement à la tige usinée (48, 66).

3. Dispositif de fixation selon l'une des revendications 1 ou 2, **caractérisé en ce qu'**il comporte un contre-écrou (50, 70) coopérant avec la tige filetée (48, 66) des moyens d'accrochage.

4. Dispositif de fixation selon l'une des revendications 1 à 3, **caractérisé en ce que** les moyens d'accrochage se présentent sous la forme d'un oeilleton (62) muni d'une tige filetée (66).

5. Dispositif de fixation selon l'une des revendications 1 à 3, **caractérisé en ce que** les moyens d'accrochage comportent d'une part un axe fileté (40) coopérant avec le taraudage (38) de la tige (26) et d'autre part une chape (42) fixée sur l'axe (40).

6. Dispositif de fixation selon la revendication 5, **caractérisé en ce que** la chape (42) est vissée sur l'axe fileté (40) et est disposée entre deux écrous (56) placés sur cet axe (40).

7. Dispositif de fixation selon la revendication 1, **caractérisé en ce que** les moyens d'accrochage comportent un collier (92) fixé sur la tige (130) usinée à l'aide d'une vis (82).

8. Aéronef dont la structure présente des organes de fixation comportant d'une part une tige (30 ; 130) munie à l'une de ses extrémités d'une tête (28 ; 128) et présentant à son autre extrémité sur sa paroi périphérique un usinage extérieur (32 ; 132) et d'autre part une douille (34 ; 134) coopérant avec l'usinage de la tige pour venir se fixer sur cette tige (30 ; 130), la tige d'au moins l'un des organes de fixation présentant du côté de son usinage extérieur (32 ; 132) un taraudage longitudinal (38 ; 138),
**caractérisé en ce que** la douille (34; 134) coopère avec la tête (28 ; 128) pour réaliser un serrage contribuant à l'assemblage de la structure de l'aéronef, et **en ce que** la tête (28 ; 128) d'au moins un organe de fixation est orientée vers l'intérieur de l'aéronef tandis que la tige (30 ; 130) et son taraudage (38 ; 138) correspondants sont orientés vers l'extérieur de l'aéronef.

## Claims

1. A fixing device for fixing a member (6, 90) to an aircraft structure, said device comprising:
- a shank (30 ; 130) provided with a head (28 ; 128) at one of its ends and having at its other end firstly, on its peripheral wall an outer machined portion (32 ; 132) and secondly a longitudinal internal thread (38 ; 138), and
- means for attachment of the member (6, 90) onto the shank (30 ; 130), said means having at a first end a threaded shank (48 ; 66 ; 82) cooperating with said longitudinal internal thread (38 ; 138),
**characterized in that** the device comprises a bush (34 ; 134) cooperating with the outer machined portion of the shank in order to be fixed onto said shank (30 ; 130) so as to be able to clamp a part of the structure of the aircraft between the head (28 ; 128) and the bush (34 ; 134), and **in that** the attachment means have means (42 ; 64 ; 84) for fastening to a second end.

2. A fixing device according to claim 1, **characterized in that** the attachment means have a bore (68) substantially perpendicular to the machined shank (48, 66).

3. A fixing device according to one of claims 1 or 2 , **characterized in that** it comprises a lock-nut (50, 70) cooperating with the threaded shank (48, 66) of the attachment means.

4. A fixing device according to one of claims 1 to 3, **characterized in that** the attachment means take the form of an eyebolt (62) provided with a threaded shank (66).

5. A fixing device according to one of claims 1 to 3, **characterized in that** the attachment means comprise firstly a threaded shaft (40) cooperating with the internal thread (38) of the shank (26) and secondly a clevis (42) fixed to the shaft (40).

6. A fixing device according to claim 5, **characterized in that** the clevis (42) is screwed to the threaded shaft (40) and is disposed between two nuts (56) on said shaft (40).

7. A fixing device according to claim 1, **characterized in that** the attachment means comprise a collar (92) fixed to the machined shank (130) with a screw (82).

8. An aircraft of which the structure has fixing units comprising firstly a shank (30 ; 130) provided with a head (28 ; 128) at one of its ends and having at its other end on its peripheral wall an outer machined portion (32 ; 132) and secondly a bush (34 ; 134) cooperating with the machined portion of the shank so as to be fixed to said shank (30 ; 130), the shank of at least one of the fixing units having at the same end as its outer machined portion (32 ; 132) a longitudinal internal thread (38 ; 138).
**characterized in that** the bush (34 ; 134) cooperates with the head (28 ; 128) to provide clamping contributing to the assembly of the structure of the aircraft, and **in that** the head (28 ; 128) of at least one fixing unit is oriented toward the interior of the aircraft whereas the shank (30 ; 130) and its corresponding internal thread (38 ; 138) are oriented toward the exterior of the aircraft.

## Patentansprüche

1. Vorrichtung zum Befestigen eines Bauteils (6, 90) an einer Luftfahrzeugstruktur, wobei diese Vorrichtung folgendes enthält:
- eine Stange (30; 130), die an einem ihrer Enden mit einem Kopf (28; 128) versehen ist und an ihrem anderen Ende einerseits eine Außenbearbeitung (32; 132) an ihrer umlaufenden Wand und andererseits ein Längsinnengewinde (38; 138) aufweist, und
- Mittel zum Anbringen des Bauteils (6, 90) an der Stange (30; 130), wobei diese Mittel an einem ersten Ende eine Gewindestange (48; 66; 82) aufweisen, die mit dem Längsinnengewinde (38; 138) zusammenwirkt,
**dadurch gekennzeichnet, dass** die Vorrichtung eine mit der Außenbearbeitung der Stange zusammenwirkende Hülse (34; 134) aufweist, um sich an dieser Stange (30; 130) so zu befestigen, dass ein Teil der Luftfahrzeugstruktur zwischen dem Kopf (28; 128) und der Hülse (34; 134) verspannt werden kann, und dass die Anbringungsmittel an einem zweiten Ende Befestigungsmittel (42; 64; 84) aufweisen.

2. Befestigungsvorrichtung nach Anspruch 1, **dadurch gekennzeichnet, dass** die Anbringungsmittel eine Bohrung (68) aufweisen, die sich im wesentlichen senkrecht zur bearbeiteten Stange (48, 66) erstreckt.

3. Befestigungsvorrichtung nach einem der Ansprüche 1 oder 2, **dadurch gekennzeichnet, dass** sie eine Gegenmutter (50, 70) aufweist, die mit der Gewindestange (48, 66) der Anbringungsmittel zusammenwirkt.

4. Befestigungsvorrichtung nach einem der Ansprüche 1 bis 3, **dadurch gekennzeichnet, dass** die Anbringungsmittel aus einer Aufnahmeöse (62) bestehen, die mit einer Gewindestange (66) versehen ist.

5. Befestigungsvorrichtung nach einem der Ansprüche 1 bis 3, **dadurch gekennzeichnet, dass** die Anbringungsmittel einerseits eine Gewindeachse (40), die mit dem Innengewinde (38) der Stange (26) zusammenwirkt, und andererseits eine Abdeckung (42) aufweisen, die auf der Achse (40) befestigt ist.

6. Befestigungsvorrichtung nach Anspruch 5, **dadurch gekennzeichnet, dass** die Abdeckung (42) auf die Gewindeachse (40) geschraubt und zwischen zwei Muttern (56) angeordnet ist, die auf dieser Achse (40) aufgesetzt sind.

7. Befestigungsvorrichtung nach Anspruch 1, **dadurch gekennzeichnet, dass** die Anbringungsmittel eine Schelle (92) aufweisen, die mittels einer Schraube (82) an der bearbeiteten Stange (130) befestigt ist.

8. Luftfahrzeug, dessen Struktur Befestigungselemente aufweist, die einerseits eine Stange (30; 130), welche an einem ihrer Enden mit einen Kopf (28; 128) versehen ist und am anderen Ende eine Außenbearbeitung (32; 132) an ihrer umlaufenden Wand aufweist, und andererseits eine mit der Außenbearbeitung der Stange zusammenwirkende Hülse (34; 134) umfassen, um sich an dieser Stange (30; 130) zu befestigen, wobei die Stange mindestens eines der Befestigungselemente auf der Seite ihrer Außenbearbeitung (32; 132) ein Längsinnengewinde (38, 138) aufweist,
**dadurch gekennzeichnet, dass** die Hülse (34; 134) mit dem Kopf (28; 128) zusammenwirkt, um eine Verspannung auszuführen, die zum Zusammenbau der Luftfahrzeugstruktur beiträgt, und dass der Kopf (28; 128) mindestens eines Befestigungselements zur Innenseite gerichtet ist, während die Stange (30; 130) und deren entsprechendes Innengewinde (38; 138) zur Außenseite des Luftfahrzeugs gerichtet sind.
